# EUROPÄISCHE PATENTSCHRIFT

(11) **EP 1 620 934 B1**
(45) Veröffentlichungstag und Bekanntmachung des Hinweises auf die Patenterteilung: **03.11.2010**
(21) Anmeldenummer: 03785560.8
(22) Anmeldetag: 11.12.2003
(51) Int. Cl.: H02K 7/102, F16D 59/02

(54) **Elektromotor mit einer Bremseinrichtung**
Electric motor with a braking device
Moteur électrique avec un dispositif de freinage

(30) Priorität: 01.04.2003 DE 10314887
(43) Veröffentlichungstag der Anmeldung: 01.02.2006
(73) Patentinhaber: ROBERT BOSCH GMBH, 70442 Stuttgart (DE)
(72) Erfinder: HABELE, Michael, 71111 Waldenbuch (DE)
(86) Internationale Anmeldenummer: PCT/DE2003/004102
(87) Internationale Veröffentlichungsnummer: WO 2004/088820

(56) Entgegenhaltungen:
- EP-A- 0 043 498
- WO-A-99/10966
- DE-A- 19 860 396
- DE-C- 971 331
- GB-A- 989 868

## Beschreibung

### Stand der Technik

Die Erfindung geht aus von einer Bremseinrichtung für einen Elektromotor gemäß dem Oberbegriff des Anspruchs 1.

Aus DE 198 60 396 A1 ist eine Bremseinrichtung für einen Elektromotor bekannt, die einen Rotor des Elektromotors im abgeschalteten Zustand abbremst. Hierzu weist die bekannte Bremseinrichtung ein Bremselement in Form eines zweiseitigen Hebels mit einem Bremsarm und einem Ausrückarm auf, wobei der Bremsarm durch eine Feder in Richtung auf den Rotor vorgespannt wird und diesen dadurch im abgeschalteten Zustand abbremst. Im eingeschalteten Zustand des Elektromotors wird dagegen eine Ständerwicklung des Elektromotors bestromt, wodurch der Ausrückarm des Bremselements angezogen wird, so dass der Bremsarm entgegen der Federspannung von dem Rotor abgehoben wird und diesen dadurch freigibt. Zwischen dem Joch des Stators und dem Ausrückarm des Bremselements befindet sich hierbei ein Luftspalt, dessen Breite von der Stellung des Bremselements abhängig ist. Weiterhin ist in einer Aufschlagfläche des Ausrückarms ein Kurzschlussring eingepresst, der in der Aufschlagfläche des Ausrückarms parallel zu dem Luftspalt verläuft.

Aus WO 99/10966 ist ebenfalls ein Elektromotor mit einer mechanisch wirkenden Bremseinrichtung zum Abbremsen der Antriebswelle bekannt. Dabei ist der Rotor mit einer mechanischen Bremskraft beaufschlagbar.

### Vorteile der Erfindung

Die Erfindung verbessert die mechanische Standfestigkeit der vorstehend beschriebenen bekannten Bremseinrichtung dadurch, dass eine von dem Kurzschlussring eingeschlossene Fläche gegenüber einer Grenzfläche des Ausrückarms zu dem Luftspalt zwischen dem Stator und dem Ausrückarm derart geneigt ist, dass ein Teil des Kurzschlussrings in dem Luftspalt angeordnet ist und der andere Teil des Kurzschlussrings von dem Stator abgewandt angeordnet ist, wobei der Kurzschlussring den Ausrückarm umgreift der Kurzschlussring gegenüber dem Luftspalt geneigt montiert wird, was mit verschiedenen Vorteilen verbunden ist.

Zum einen ermöglicht die gegenüber dem Luftspalt geneigte Anordnung des Kurzschlussrings eine innigere mechanische Verbindung zwischen dem Kurzschlussring und dem Ausrückarm des Bremselements, was die mechanische Standfestigkeit erhöht.

Zum anderen befindet sich bei der erfindungsgemäßen geneigten Anordnung des Kurzschlussrings nur ein Teil des Kurzschlussrings in dem mechanisch belasteten Luftspalt, wohingegen der restliche Kurzschlussring mechanisch geringer belastet ist.

Ein weiterer Vorteil der erfindungsgemäßen Anordnung des Kurzschlussrings besteht darin, dass nahezu der gesamte magnetische Fluss durch den Ausrückarm bzw, das Bremselement auch durch den Kurzschlussring geleitet werden kann, so dass der Kurzschlussring Vibrationen (Null-Durchgänge bei Wechselstrom) effektiv unterdrücken kann.

Vorzugsweise ist der Kurzschlussring in einer Betriebsstellung des Bremselements im Wesentlichen rechtwinklig zu dem Luftspalt angeordnet, wobei der Kurzschlussring den gesamten Ausrückarm des Bremselements umgreift. Diese Anordnung des Kurzschlussrings ist mit dem bereits vorstehend erwähnten Vorteil verbunden, dass der gesamte magnetische Teilfluss, hier Hauptfluss benannt, durch den Ausrückarm auch den Kurzschlussring durchflutet.

Ein weiterer Teilfluss, hier Nebenfluss genannt, wird nicht durch den Kurzschlussring gestört und fließt durch den sogegannten "Bottleneck" bzw. dient nach der Kurzschlusswindung dem Anziehen des Bremselementes. Zur vereinfachten Darstellung der Funktion des Kurzschlussringes teilt man den magnetischen Fluss in die Teilflüsse Haut- und Nebenfluss auf. Der Hauptfluss durchdringt die Fläche, die der Kurzschlussring umschließt, der Nebenfluss fließt durch den Bottleneck in auflaufende Polhorn bzw. dient auch dem Anziehen des Bremselementes über den zusätzlichen Luftspalt nach der Kurzschlussring.

Die mit der Frequenz behaftete Hauptfluss treibt einen Strom im Kurzschlussring an. Dieser Strom erzeugt wiederum ein Feld, das dem verursachendem Feld entgegenwirkt. Dies bewirkt eine Phasenverschiebung gegenüber dem ungestörtem Nebenfluss. Addiert man nun Haut- und Nebenfluss, wie in oben gezeigtem Bild, wird der Nulldurchgang eliminiert. Die mechanischen Schwingungen von 100 Hz werden unterdrückt.

Die Erfindung ist jedoch hinsichtlich der Anordnung des Kurzschlussrings relativ zu dem Luftspalt nicht auf eine rechtwinklige Anordnung beschränkt. Vielmehr kann der Kurzschlussring mit dem Luftspalt auch Winkel kleiner als 90° einschließen.

Der Kurzschlussring ist jedoch so angeordnet, dass nur ein Teil des Kurzschlussrings den mechanischen Belastungen ausgesetzt ist, die beim Auftreffen der Aufschlagfläche des Ausrückarms auf das Joch des Stators entstehen. Dies lässt sich dadurch erreichen, dass sich nur ein Teil des Kurzschlussrings in dem Luftspalt befindet, während der Rest des Kurzschlussrings außerhalb des Luftspalts angeordnet ist.

Es ist wünschenswert, dass möglichst viel magnetischer Fluss in dem Bremselement bzw. dem Ausrückarm des Bremselements, auch den Kurzschlussring durchsetzt. In der Praxis setzt sich jedoch der magnetische Fluss durch das Bremselement aus einem den Kurzschlussring durchflutenden magnetischen Hauptfluss und einem den Kurzschlussring umgehenden magnetischen Nebenfluss zusammen.

Dieses Verhältnis zwischen dem magnetischen Nebenfluss und dem magnetischen Hauptfluss lässt sich unter anderem dadurch erreichen, dass der Luftspalt zwischen dem Bremselement bzw. dem Ausrückarm des Bremselements und dem Stator bzw. dem Joch des Stators im Bereich des magnetischen Hauptflusses kleiner ist als im Bereich des magnetischen Nebenflusses. Auf diese Weise bildet der Luftspalt im Bereich des magnetischen Nebenflusses einen größeren magnetischen Widerstand als im Bereich des magnetischen Hauptflusses, wodurch der magnetische Nebenfluss unterdrückt wird.

Das Bremselement bzw. der Ausrückarm des Bremselements weist deshalb vorzugsweise eine Grenzfläche zu dem Luftspalt auf, die im Bereich des magnetischen Nebenflusses gegenüber dem

Bereich des magnetischen Hauptflusses zurückgesetzt ist, um den Luftspalt zu vergrößern.

In einem bevorzugten Ausführungsbeispiel der erfindungsgemäßen Bremseinrichtung weist der Stator ein magnetisch leitfähiges Joch und eine Statorwicklung auf, wobei sich bei dem Joch zwischen der Statorwicklung und dem Luftspalt zu dem Bremselement eine Engstelle befindet die vorzeitig in Sättigung geht, so dass der magnetische Hauptfluss die Engstelle umgeht, während der magnetische Nebenfluss die Engstelle passiert.

Diese Anordnung führt zu einem vorgegebenen Verhältnis zwischen dem magnetischen Nebenfluss und dem magnetischen Hauptfluss, wenn die Engstelle im Sättigungsbereich.. betrieben wird.

Die Engstelle ist immer in Sättigung, nur der Hauptfluss wird geringer.

Zur Korrektur dieser Veränderung ist der Luftspalt im Bereich des magnetischen Nebenflusses vorzugsweise verbreitert wie bereits vorstehend beschrieben wurde.

Weiterhin ist hierbei zu erwähnen, dass der Kurzschlussring vorzugsweise im Bereich der Engstelle des Jochs angeordnet ist, so dass der magnetische Fluss die Engstelle passieren muss, um den Kurzschlussring zu umgehen.

Das Bremselement ist als schwenkbarer Hebel mit einem Bremsarm und einem Ausrückarm ausgebildet, wie eingangs zum Stand der Technik erläutert wurde. Die in der Beschreibungseinleitung bereits erwähnte Veröffentlichung DE 198 60 396 A1 ist deshalb hinsichtlich der Gestaltung der Bremseinrichtung der vorliegenden Beschreibung in vollem Umfang zuzurechnen.

Ferner ist zu erwähnen, dass der Kurzschlussring vorzugsweise mindestens teilweise mit dem Bremselement verstemmt oder verschweißt ist. Hierzu können Kalotten in Spornteilpakete im Bereich des Kurzschlussrings eingearbeitet sein.

In einem bevorzugten Ausführungsbeispiel ist der Kurzschlussring jedoch mit dem Bremselement verschweißt, was eine besonders hohe mechanische Standfestigkeit ermöglicht. Die Verschweißung des Kurzschlussrings mit dem Bremselement ist hierbei vorzugsweise nur einseitig auf der dem Luftspalt abgewandten Seite des Kurzschlussrings.

Zur Verschweißung des Kurzschlussrings mit dem Bremselement wird vorzugsweise ein Schweißverfahren eingesetzt, das einen schnellen Wärmeabfluss verhindert, da der Kurzschlussring aus gut wärmeleitfähigem Kupfer und das Bremselement üblicherweise aus geblechtem Stahl besteht.

Hierzu eignet sich vorteilhaft ein WIK-Verfahren mit einer vorgegebenen, genau definierten Schweißgeschwindigkeit. Hierbei werden die zu verschweißenden Teile vorzugsweise in ein Schweißwerkzeug eingespannt, bei dem die Masseverteilung der Spannelemente so optimiert wurde, dass sich die Wärmeeinflusszone im Kupfer und in dem geblechten Stahl des Bremselements möglichst gleich ausbildet.

### Zeichnung

Weitere Vorteile ergeben sich aus der folgenden Zeichnungsbeschreibung.

Es zeigen:
- Fig. 1: eine Querschnittsansicht durch eine erfindungsgemäße Bremseinrichtung eines Elektromotors,
- Fig. 2: eine vergrößerte Querschnittsansicht der Bremseinrichtung aus Figur 1 im Bereich eines Luftspalts,
- Fig. 3a-3c: Seitenansichten eines Bremselements der Bremseinrichtung aus Figur 1 in verschiedenen Monta;gestadien sowie
- Fig. 4a-4c: das Bremselement aus den Figuren 3a-3c in perspektivischen Ansichten während der verschiedenen Montagestadien.

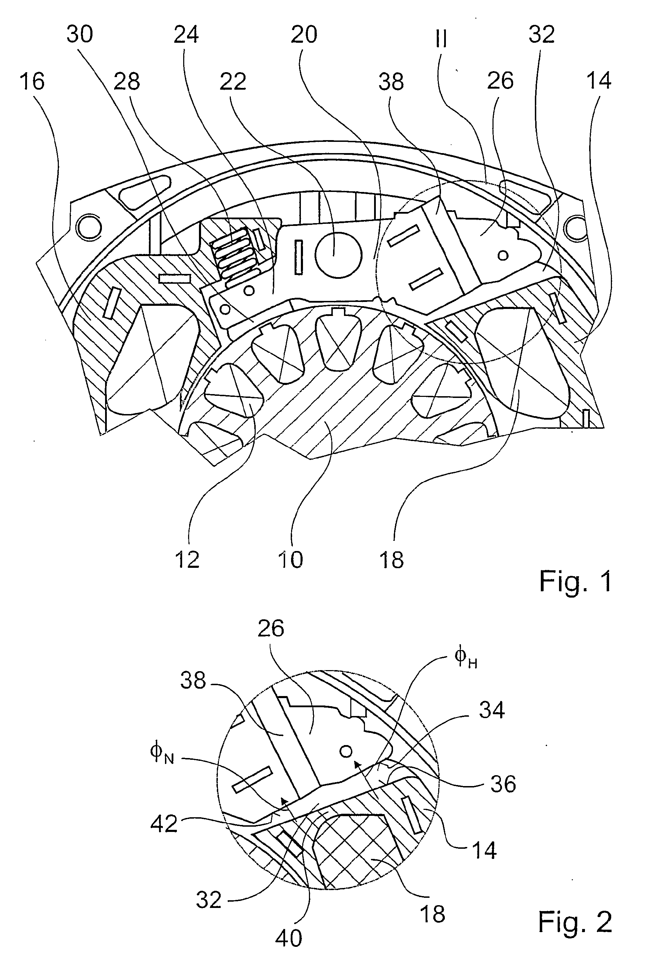

In der Querschnittsansicht in Fig. 1 ist ein Rotor 10 einer Elektromotors dargestellt, wobei an der Außenseite des im Wesentlichen zylindrischen Rotors 10 mehrere Rotorwicklungen 12 angeordnet sind.

Weiterhin sind zwei Jochteile 14, 16 eines zugehörigen Stators dargestellt, wobei die Jochteile 14, 16 den magnetischen Fluss führen, der von einer Statorwicklung 18 erzeugt wird.

Darüber hinaus wird der von der Statorwicklung 18 erzeugte magnetische Fluss auch von einem Bremselement 20 geführt, das um eine Schwenkachse 22 schwenkbar gelagert ist, wobei das Bremselement 20 als zweiseitiger Hebel ausgebildet ist und einen Bremsarm 24 sowie einen Ausrückarm 26 aufweist.

Der Bremsarm 24 wird von einer Feder 28 vorgespannt, die sich an dem Jochteil 16 abstützt und den Bremsarm 24 radial nach innen gegen den Rotor 10 drückt, wobei zwischen dem Bremsarm 24 und dem Rotor 10 ein Bremsbelag 30 angeordnet ist.

Zwischen dem Ausrückarm 26 und dem Jochteil 14 befindet sich dagegen ein Luftspalt 32, dessen Breite von der Stellung des Bremselements 20 abhängt. So ist der Luftspalt 32 in der in Figur 1 gezeigten Bremsstellung relativ groß, wohingegen der Luftspalt 32 dünner wird, wenn das Bremselement 20 aus der in Figur 1 gezeigten Bremsstellung im Uhrzeigersinn um die Schwenkachse 22 in die Betriebsstellung geschwenkt wird.

Hierzu wird die Statorwicklung 18 bestromt, so dass in den Jochteilen 14, 16 ein magnetischer Fluss entsteht, wobei der magnetische Fluss in dem Jochteil 16 in das magnetisch leitfähige Bremselement 20 und von dort in den Rotor 10 übertritt, während der magnetische Fluss in dem Jochteil 14 über den Luftspalt 32 in das Bremselement 20 und von dort in den Rotor 10 eintritt. Der magnetische Fluss in dem Luftspalt 32 führt zu einer Anziehungskraft zwischen dem Ausrückarm 26 und dem Jochteil 14, so dass das Bremselement 20 um die Schwenkachse 22 im Uhrzeigersinn gedreht wird, bis eine an dem Ausrückarm 26 befindliche Aufschlagfläche 34 auf eine entsprechende Aufschlagfläche 36 an dem Jochteil 14 auftrifft, wenn das Bremselement 20 seine Betriebsstellung einnimmt. In der Betriebsstellung ist der Bremsarm 24 dann entgegen der Vorspannung der Feder 28 von dem Rotor 10 abgehoben, so dass der Bremsbelag 30 den Rotor 10 freigibt.

Das Bremselement 20 weist darüber hinaus einen Kurzschlussring 38 auf, der den Ausrückarm 26 umschließt und die Aufgabe hat, mechanische Vibrationen in der Betriebsstellung des Bremselements 20 zu unterdrücken.

Der Kurzschlussring 38 umgreift hierbei den Ausrückarm 26 des Bremselements 20 vollständig, so dass der durch den Ausrückarm 26 des Bremselements 20 fließende magnetische Fluss den Kurzschlussring 38 nahezu vollständig durchsetzt, was zu einer sehr guten Unterdrückung mechanischer Vibrationen führt.

Hierbei ist zu erwähnen, dass der Kurzschlussring 38 im Wesentlichen rechtwinklig zu dem Luftspalt 32 angeordnet ist, so dass sich nur ein Teil des Kurzschlussrings 38 in dem Luftspalt 32 befindet und mechanischen Belastungen ausgesetzt ist, wohingegen sich der Kurzschlussring 38 ansonsten an der Oberseite des Ausrückarms 26 befindet, wo kaum mechanische Belastungen wirken.

Weiterhin weist das Jochteil 14 zwischen dem Luftspalt 32 und der Statorwicklung 18 eine Engstelle 40 auf, die einen magnetischen Widerstand in dem Jochteil 14 bildet. In diesem Zusammenhang ist zu erwähnen, dass sich der magnetische Fluss in dem Jochteil 14 in einen magnetischen Hauptfluss φ_{H} und einen magnetischen Nebenfluss φ_{N} aufteilt, wobei der magnetische Hauptfluss φ_{H} die Engstelle 40 umgeht und den Kurzschlussring 38 vollständig durchsetzt, während der magnetische Nebenfluss φ_{N} die Engstelle 40 passiert und den Kurzschlussring 38 umgeht. Der magnetische Widerstand der Engstelle 40 trägt dazu bei, dass der magnetische Nebenfluss φ_{N} wesentlich kleiner ist als der erwünschte magnetische Hauptfluss φ_{H}.

Dies wird noch zusätzlich dadurch unterstützt, dass der Ausrückarm 26 im Bereich des magnetischen Nebenflusses φ_{N} eine Aufschlagfläche 42 aufweist, die gegenüber der Aufschlagfläche 34 im Bereich des magnetischen Hauptflusses φ_{H} zurückgesetzt ist. Dies hat zur Folge, dass der Luftspalt 32 im Bereich des magnetischen Nebenflusses φ_{N} größer ist als im Bereich des magnetischen Hauptflusses φ_{H}, wodurch der magnetische Nebenfluss φ_{N} zurückgedrängt wird.

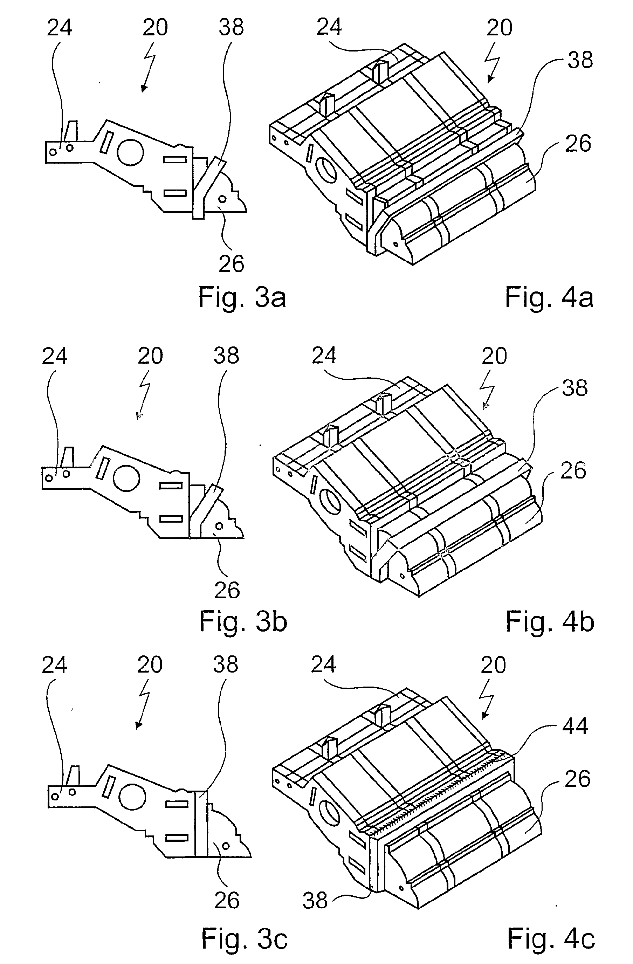

Die Figuren 3a-3c und 4a-4c zeigen das Bremselement 20 schließlich in verschiedenen Montagestadien, beginnend mit Figur 3a bzw. 4a und endend mit Figur 3c bzw. 4c. Aus diesen Darstellungen ist ersichtlich, dass der Kurzschlussring 38 an dem Ausrückarm 26 von unten eingepresst und anschließend umgebogen wird.

Schließlich wird der Kurzschlussring 38 an der Oberseite des Ausrückarms 26 durch eine Schweißnaht 44 mit dem Bremselement 20 verbunden.

### Bezugszeichen

- 10: Rotor
- 12: Rotorwicklung
- 14: Jochteil
- 16: Jochteil
- 18: Statorwicklung
- 20: Bremselement
- 22: Schwenkachse
- 24: Bremsarm
- 26: Ausrückarm
- 28: Feder
- 30: Bremsbelag
- 32: Luftspalt
- 34: Aufschlagfläche
- 36: Aufschlagfläche
- 38: Kurzschlussring
- 40: Engstelle
- 42: Aufschlagfläche
- 44: Schweißnaht

## Patentansprüche

1. Elektromotor mit einem Stator (14, 16, 18) und einem Rotor (10), insbesondere Gleichstromreihenschlussmotor, umfassend eine Bremseinrichtung mit einem Bremselement (20), das als schwenkbarer Hebel mit einem Bremsarm (24) und einem Ausrückarm (26) ausgebildet ist und in Abhängigkeit von einem magnetischen Fluss in dem Stator (14, 16, 18) zwischen einer Betriebsstellung und einer Bremsstellung beweglich ist, wobei sich zwischen dem Bremselement (20) und dem Stator (14, 16, 18) ein Luftspalt (32) befindet, sowie mit einem Kurzschlussring (38) zur Unterdrückung von mechanischen Vibrationen, **dadurch gekennzeichnet, dass** eine von dem Kurzschlussring (38) eingeschlossene Fläche gegenüber einer Grenzfläche (42) des Ausrückarms (26) zu dem Luftspalt (32) zwischen dem Stator (14, 16, 18) und dem Ausrückarm (26) derart geneigt ist, dass ein Teil des Kurzschlussrings (38) in dem Luftspalt (32) angeordnet ist und der andere Teil des Kuraschlussrings (38) von dem Stator (14, 16, 18) abgewandt angeordnet ist, wobei der Kurzschlussring (38) den Ausrückarm (26) umgreift.

2. Elektromotor nach Anspruch 1, **dadurch gekennzeichnet, dass** eine von dem Kurzschlussring (38) eingeschlossene Fläche in der Betriebsstellung des Ausrückarms (26) gegenüber einer Grenzfläche (42) des Ausrückarms (26) zu dem Luftspalt (32) im Wesentlichen rechtwinklig angeordnet ist.

3. Elektromotor nach einem der vorhergehenden Ansprüche, **dadurch gekennzeichnet, dass** sich der magnetische Fluss durch den Ausrückarm (26) aus einem den Kurzschlussring (38) durchflutenden magnetischen Hauptfluss (φ_{H}) und einem den Kurzschlussring (38) umgehenden magnetischen Nebenfluss (φ_{N}) zusammensetzt.

4. Elektromotor nach Anspruch 3, **dadurch gekennzeichnet, dass** der Luftspalt (32) zwischen dem Ausrückarm (26) und dem Stator (14, 16, 18) im Bereich des magnetischen Hauptflusses (φ_{H}) kleiner ist als im Bereich des magnetischen Nebenflusses (φ_{N}).

5. Elektromotor nach Anspruch 4, **dadurch gekennzeichnet, dass** der Ausrückarm (26) eine Grenzfläche (42) zu dem Luftspalt (32) aufweist, die im Bereich des magnetischen Nebenflusses (φ_{N}) gegenüber dem Bereich des magnetischen Hauptflusses (φ_{H}) zurückgesetzt ist, um den Luftspalt (32) zu vergrößern.

6. Elektromotor nach einem der vorhergehenden Ansprüche, **dadurch gekennzeichnet, dass** der Stator (14, 16, 18) ein Joch (14, 18) und eine Statorwicklung (18) aufweist, wobei sich in dem Joch (14, 16) zwischen der Statorwicklung (18) und dem Luftspalt (32) zu dem Ausrückarm (26) eine Engstelle (40) befindet, die einen magnetischen Widerstand in dem Joch (14) bildet, so dass der magnetische Hauptfluss (φ_{H}) die Engstelle (40) umgeht, während der magnetische Nebenfluss (φ_{N}) die Engstelle (40) bis Sättigung passiert.

7. Elektromotor nach Anspruch 6, **dadurch gekennzeichnet, dass** der Kurschlussring (38) im Bereich der Engstelle (40) des Jochs (14) angeordnet ist.

8. Elektromotor nach einem der vorhergehenden Ansprüche, **dadurch gekennzeichnet, dass** der Kurzschlussring (38) mindestens teilweise mit dem Bremselement (20) verstemmt oder verschweißt ist.

9. Elektromotor nach Anspruch 8, **dadurch gekennzeichnet, dass** der Kurzschlussring (38) auf der dem Luftspalt (32) abgewandten Seite mit dem Bremselement (20) verschweißt ist.

10. Werkzeugmaschine mit einem Elektromotor nach einem der Ansprüche 1-9.

## Claims

1. Electric motor having a stator (14, 16, 18) and a rotor (10), in particular a DC series-wound motor, comprising a braking device having a braking element (20) which is in the form of a pivotable lever with a braking arm (24) and a disengagement arm (26) and can move between an operating position and a braking position as a function of magnetic flux in the stator (14, 16, 18), with there being an air gap (32) between the braking element (20) and the stator (14, 16, 18), and also having a short-circuiting ring (38) for suppressing mechanical vibrations, **characterized in that** a face, which is enclosed by the short-circuiting ring (38), is inclined in relation to a boundary face (42) of the disengagement arm (26) relative to the air gap (32) between the stator (14, 16, 18) and the disengagement arm (26) in such a way that part of the short-circuiting ring (38) is arranged in the air gap (32) and the other part of the short-circuiting ring (38) is arranged such that it is averted from the stator (14, 16, 18), with the short-circuiting ring (38) engaging around the disengagement arm (26).

2. Electric motor according to Claim 1, **characterized in that** a face, which is enclosed by the short-circuiting ring (38), is arranged substantially at a right angle in relation to a boundary face (42) of the disengagement arm (26) relative to the air gap (32) in the operating position of the disengagement arm (26).

3. Electric motor according to either of the preceding claims, **characterized in that** the magnetic flux through the disengagement arm (26) is composed of a main magnetic flux (Φ_{H}) which flows through the short-circuiting ring (38) and a secondary magnetic flux (Φ_{N}) which bypasses the short-circuiting ring (38).

4. Electric motor according to Claim 3, **characterized in that** the air gap (32) between the disengagement arm (26) and the stator (14, 16, 18) is smaller in the region of the primary magnetic flux (Φ_{H}) than in the region of the secondary magnetic flux (Φ_{N}).

5. Electric motor according to Claim 4, **characterized in that** the disengagement arm (26) has a boundary face (42) relative to the air gap (32), the said boundary face being recessed in the region of the secondary magnetic flux (Φ_{N}) compared to the region of the primary magnetic flux (Φ_{H}) in order to increase the size of the air gap (32).

6. Electric motor according to one of the preceding claims, **characterized in that** the stator (14, 16, 18) has a yoke (14, 16) and a stator winding (18), with a narrow point (40) being located in the yoke (14, 16) between the stator winding (18) and the air gap (32) relative to the disengagement arm (26), the said narrow point forming a magnetic resistance in the yoke (14), with the result that the primary magnetic flux (Φ_{H}) bypasses the narrow point (40) while the secondary magnetic flux (Φ_{N}) passes through the narrow point (40) until saturation.

7. Electric motor according to Claim 8, **characterized in that** the short-circuiting ring (38) is arranged in the region of the narrow point (40) of the yoke (14).

8. Electric motor according to one of the preceding claims, **characterized in that** the short-circuiting ring (38) is at least partially caulked or welded to the braking element (20).

9. Electric motor according to Claim 8, **characterized in that** the short-circuiting ring (38) is welded to the braking element (20) on that side which is averted from the air gap (32).

10. Machine tool having an electric motor according to one of Claims 1-9.

## Revendications

1. Moteur électrique doté d'un stator (14, 16, 18) et d'un rotor (10), en particulier moteur série à courant continu, comprenant
un système de freinage doté d'un élément de freinage (20) configuré sous la forme d'un levier pivotant doté d'un bras de freinage (24) et d'un bras de recul (26) et pouvant être déplacé entre une position de fonctionnement et une position de freinage en fonction d'un flux magnétique qui traverse le stator (14, 16, 18), un entrefer (32) étant situé entre l'élément de freinage (20) et le stator (14, 16, 18), et
une bague de court-circuit (38) qui diminue les vibrations mécaniques,
**caractérisé en ce que**
la surface circonscrite par la bague de court-circuit (38) est inclinée par rapport à une surface limite (42) du bras de recul (26) en direction de l'entrefer (32) situé entre le stator (14, 16, 18) et le bras de recul (26), de telle sorte qu'une partie de la bague du court-circuit (38) est disposée dans l'entrefer (32) et que l'autre partie de la bague de court-circuit (38) n'est pas tournée vers le stator (14, 16, 18) et
**en ce que** la bague du court-circuit (38) chevauche le bras de recul (26).

2. Moteur électrique selon la revendication 1, **caractérisé en ce que** lorsque le bras de recul (26) est en position de fonctionnement, la surface circonscrite par la bague de court-circuit (38) est disposée face à une surface limite (42) du bras de recul (26), essentiellement perpendiculairement à l'entrefer (32).

3. Moteur électrique selon l'une des revendications précédentes, **caractérisé en ce que** le flux magnétique qui traverse le bras de recul (26) est constitué d'un flux magnétique principal (φ_{H}) qui traverse la bague de court-circuit (38) et d'un flux magnétique secondaire (φ_{N}) qui contourne la bague de court-circuit (38).

4. Moteur électrique selon la revendication 3, **caractérisé en ce qu'**entre le bras de recul (26) et le stator (14, 16, 18), l'entrefer (32) est plus petit dans la zone du flux magnétique principal (φ_{H}) que dans la zone du flux magnétique secondaire (φ_{N}).

5. Moteur électrique selon la revendication 4, **caractérisé en ce que** pour agrandir l'entrefer (32), le bras de recul (26) présente une surface limite (42) par rapport à l'entrefer (32) qui est reculée par rapport à la zone du flux magnétique principal (φ_{H}) dans la zone du flux magnétique secondaire (φ_{N}).

6. Moteur électrique selon l'une des revendications précédentes, **caractérisé en ce que** le stator (14, 16, 18) présente une culasse (14, 16) et un enroulement de stator (18), un rétrécissement (40) en direction du bras de recul (26) qui forme une résistance magnétique dans la culasse (14) étant situé dans la culasse (14, 16) entre l'enroulement de stator (18) et l'entrefer (32), de sorte que le flux magnétique principal (φ_{H}) contourne le rétrécissement (40) tandis que le flux magnétique secondaire (φ_{N}) traverse le rétrécissement (40) jusqu'à saturation.

7. Moteur électrique selon la revendication 6, **caractérisé en ce que** la bague du court-circuit (38) est disposée dans la partie occupée par le rétrécissement (40) de la culasse (14).

8. Moteur électrique selon l'une des revendications précédentes, **caractérisé en ce qu'**au moins une partie de la bague de court-circuit (38) est serrée ou soudée sur l'élément de freinage (20).

9. Moteur électrique selon la revendication 8, **caractérisé en ce que** sur son côté non tourné vers l'entrefer (32), la bague de court-circuit (38) est soudée à l'élément de freinage (20).

10. Machine-outil dotée d'un moteur électrique selon l'une des revendications 1 à 9.
